(19) **Europäisches Patentamt / European Patent Office / Office européen des brevets**

(11) **EP 4 756 743 A2**

(12) **EUROPEAN PATENT APPLICATION**

(43) Date of publication:
10.06.2026 Bulletin 2026/24

(21) Application number: 26173253.1

(22) Date of filing: 01.07.2019

(51) International Patent Classification (IPC):
*G06V 20/56* *(2022.01)*

(52) Cooperative Patent Classification (CPC):
**B60W 30/12; G06V 20/588;** B60W 2050/0075;
B60W 2552/05; B60W 2552/53; B60W 2554/00;
B60W 2554/801; B60W 2556/20; B60W 2556/45;
B60W 2556/50; B60W 2556/55; B60W 2556/65

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(62) Document number(s) of the earlier application(s) in
accordance with Art. 76 EPC:
19739934.8 / 3 994 043

(71) Applicant: **Zenuity AB**
413 46 Göteborg (SE)

(72) Inventors:
• **DAHLBÄCK, Anders**
438 36 Landvetter (SE)
• **WRANNE, Staffan**
435 43 Pixbo (SE)

(74) Representative: **Zacco Sweden AB**
P.O. Box 5581
Löjtnantsgatan 21
114 85 Stockholm (SE)

Remarks:
This application was filed on 20-04-2026 as a
divisional application to the application mentioned
under INID code 62.

(54) **SOURCED LATERAL OFFSET FOR ADAS OR AD FEATURES**

(57) The present disclosure relates to methods and control devices for providing a road model of a portion of a surrounding environment of a vehicle. More specifically, the present disclosure relates to utilizing stored reference data in the form of a lateral offset of a road reference (e.g. lane marker) in relation to a road boundary in order to either verify a local measurement of the lateral offset or to control a driver-assistance or autonomous driving feature based on the stored reference data. The present disclosure also relates to a method for providing verification data for road model estimations.

*Fig. 6a*

EP 4 756 743 A2

**Description**

TECHNICAL FIELD

The present disclosure relates to the field of autonomous drive (AD) and advanced driver assistance systems (ADAS). More specifically, the present disclosure relates to methods and control devices for determining lateral offsets (relative to a road boundary) for traced road references and thereby a road boundary representation for a vehicle positioned on a road.

BACKGROUND

During these last few years, the development of autonomous vehicles has exploded and many different solutions are being explored. Today, development is ongoing in both autonomous driving (AD) and advanced driver-assistance systems (ADAS), i.e. semiautonomous driving, within a number of different technical areas within these fields. One such area is how to position the vehicle with accuracy and consistency since this is an important safety aspect when the vehicle is moving within traffic.

Road departures are a critical issue in both AD and ADAS systems and proper solutions to mitigate the risk of road departures are of utmost importance, moreover, road edge interventions are a part of EuroNCAP Lane Support System (LSS) rating. Generally, lane support systems are classified in two subcategories lane departure warning and lane keep assist, which are designed to assist and warn drivers when one unintentionally leaves the road lane or when one changes lanes without indication.

However, all lane support systems or any other steering system, precise and reliable detection of the road geometry is a key function. Conventional solutions are based on the idea of tracking a road reference (e.g. a lane marking) and adding an offset in order to estimate a location of the road edge relative to the vehicle. More specifically, currently known solutions include logics for first deciding what reference to use (left lane markings, right lane markings, other landmarks, other vehicles, etc.) and if tracking of the selected reference was lost during an intervention the intervention would be aborted, or a swap to another reference had to be performed (which would require more logics). Not only is there a safety risk involved with aborting an intervention or forcing the LSS to switch to a different reference, but the user experience is also impaired.

In view of upcoming stricter requirements for Lane Support Systems, and the general objective in the automotive industry for providing reliable, robust and cost effective solutions there is a need for new and improved solutions which mitigate the problems associated with currently known systems for road boundary tracking.

SUMMARY OF THE INVENTION

It is therefore an object of the present disclosure to provide a method for providing a road model of a portion of a surrounding environment of a vehicle, a method for providing verification data for road model estimations, corresponding computer-readable storage media, a control device, and a vehicle, which alleviate all or at least some of the drawbacks of presently known systems.

In more detail, it is an object of the present disclosure to provide a robust and reliable solution for tracking a road edge suitable for implementation in lane support systems for autonomous and semi-autonomous vehicles.

These and other objects are achieved by means of a method for providing a road model of a portion of a surrounding environment of a vehicle, a method for providing verification data for road model estimations, corresponding computer-readable storage media, a control device, and a vehicle, and a vehicle as defined in the appended claims. The term exemplary is in the present context to be understood as serving as an instance, example or illustration.

According to a first aspect of the present disclosure, there is provided a method for providing a road model of a portion of a surrounding environment of a vehicle. A road model may be understood as a representation of a drivable path in a surrounding environment of the vehicle, where the road model comprises lane tracing and road boundary tracing features. The method comprises obtaining a geographical position of the vehicle from a localization system of the vehicle, and obtaining sensor data comprising spatial information about a road reference and a road boundary located in the surrounding environment of the vehicle. Furthermore, the method comprises determining or obtaining a first lateral distance between the road reference and the road boundary, and obtaining a comparison between the determined first lateral distance and a corresponding second lateral distance between the road reference and the road boundary based on the geographical position of the vehicle. The second lateral distance is a stored reference distance, which can be stored locally in the vehicle or remotely in a remote data repository accessible from the vehicle via an external wide area network. The method further comprises controlling a driver-assistance or autonomous driving feature based on the comparison between the determined first lateral distance and the corresponding second lateral distance.

The presented method discussed provides an efficient means for verifying a road boundary representation of an in-vehicle system by comparing sensor data with reference data in real-time in order to reduce the risk of accidental road departures or erroneous interventions by vehicle safety systems due to inaccurate road boundary tracing. The inaccuracies may for example be caused by inaccurate or corrupt sensor data. The lateral distance from the traced road reference (e.g. lane marking) and the road boundary (e.g. road edge) may also be referred to as a "lateral offset" of the traced road reference. Stated differently, the "perceived" lateral distance is compared with a reference value (which can be stored locally or remotely in the "cloud"), in order to verify the vehicle's own sensor readings and then control an AD or ADAS feature (e.g. a road departure mitigation system) based on the verification result. Rendering in increased availability and reliability for road edge tracking in ADAS and AD systems.

The term obtaining is herein to be interpreted broadly and encompasses receiving, retrieving, collecting, acquiring, and so forth. A road boundary is in the present context to be understood as an edge portion of the road and may in some contexts be referred to as a road edge. Nevertheless, a road boundary may in some exemplary embodiments be a road edge, a barrier, a curb, a ditch, or any other structure defining the edge portion of a drivable surface (i.e. the road). Spatial information about the road reference or the road boundary may for example include data of the road reference or the road boundary required to estimate a tracing or tracking of that road reference or road boundary. A road reference is to be understood as a reference feature that can be used to estimate a geometry of the road in reference to the vehicle. The road reference may for example be a left lane marker, a right lane marker, a guidepost, a vehicle, a road boundary (i.e. the left road edge may be used to estimate the position of the right road edge), and so forth.

The present inventors realized that in order to increase availability and reliability of for example lane tracing solutions one can utilize measurements made by other vehicles which have been uploaded to the "cloud" to verify the vehicle's own estimations. In more detail, the present inventors realized that the lateral offset in lane tracing models (i.e. lateral distance from a traced reference to a road boundary) is a parameter needed for road modelling that is prone to measurement errors. The measurement errors can originate from environmental factors (e.g. snow covered road edges) or due to hardware malfunctions. Thus, by providing means for verifying measurements based on measurements made by other vehicles in the same geographical area, simple and effective means for verifying the lane tracing systems are readily achievable.

Moving on, according to an exemplary embodiment of the present disclosure, the method further comprises assigning a confidence value for the determined first lateral distance based on at least one predefined condition, and the step of controlling the driver-assistance or autonomous driving feature is further based on the assigned confidence value.

Further, and in accordance with another exemplary embodiment of the present disclosure, the method further comprises comparing the assigned confidence value with a predefined confidence threshold. Accordingly, the step of controlling the driver-assistance or autonomous driving feature comprises suppressing the driver-assistance or autonomous driving feature if one of the two following two conditions are fulfilled. Either if the comparison between the determined first lateral distance and the corresponding second lateral distance indicates that a difference between the determined first lateral distance and the obtained second lateral distance is above a first predefined threshold, or if the assigned confidence value for the determined first lateral distance is below the predefined confidence threshold. Thus, the ADAS or AD feature is suppressed if the vehicle's internal systems indicate that the measurement may be erroneous or if the comparison with the "reference" value indicates that the measurement may be erroneous.

However, in accordance with another exemplary embodiment, the ADAS or AD feature is not suppressed, but instead the "reference value", i.e. the second lateral distance is used as an input parameter instead based on a corresponding confidence test. In more detail, and in accordance with another exemplary embodiment of the present disclosure, the method further comprises comparing the assigned confidence value with a predefined confidence threshold, and obtaining the corresponding second lateral distance between the road reference and the road boundary. Further, the step of controlling the driver-assistance or autonomous driving feature comprises applying the obtained second lateral distance as a control parameter for the driver-assistance or autonomous driving feature if one of the following conditions are true. Either, if the comparison between the determined first lateral distance and the corresponding second lateral distance indicates that a difference between the determined first lateral distance and the obtained second lateral distance is above a first predefined threshold, or if the assigned confidence value for the determined first lateral distance is below the predefined confidence threshold.

Still further, according to yet another exemplary embodiment, the method further comprises sending the obtained geographical position of the vehicle and each first lateral distance to a remote entity, and the step of obtaining the comparison comprises receiving, from the remote entity, the comparison between the first lateral distance and the corresponding second lateral distance. The term remote entity is to be interpreted broadly in the present context, and encompasses any suitable remote system capable of processing data, as well as transmitting and receiving data to and from remote clients (e.g. vehicles).

However, the processing of data, i.e. the comparison between the first and second lateral distances may also be performed locally in the vehicle. Thus, in accordance with yet another exemplary embodiment the method further comprises sending the obtained geographical position of the vehicle to a remote entity, and receiving, from the remote entity, the corresponding second lateral distance between the road reference and the road boundary based on the vehicle's geographical position. Thus, the step of obtaining the comparison comprises (locally) comparing the first lateral distance with the corresponding second lateral distance.

The reference data may also be comprised by a local data repository (e.g. saved as a layer in a locally stored HD map). Thus, according to yet another exemplary embodiment of the present disclosure, the method further comprises receiving, from a local data repository, the corresponding second lateral distance between the road reference and the road boundary based on the geographical position of the vehicle. Thus, the step of obtaining the comparison comprises (locally) comparing each first lateral distance with the corresponding second lateral distance.

According to a second aspect of the present disclosure, there is provided a (non-transitory) computer-readable storage medium storing one or more programs configured to be executed by one or more processors of a vehicle control system, the one or more programs comprising instructions for performing the method according to any one of the embodiments discussed with respect to the first aspect of the disclosure. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further, according to a third aspect of the present disclosure, there is provided a control device for providing a road model of a portion of a surrounding environment of a vehicle. The control device comprises control circuitry configured to obtain a geographical position of the vehicle from a localization system of the vehicle, and to obtain sensor data comprising spatial information about a road reference and a road boundary located in the surrounding environment of the vehicle. The control circuitry is further configured to determine or obtain a first lateral distance between the road reference and the road boundary, and to obtain a comparison between the determined first lateral distance and a corresponding second lateral distance between the road reference and the road boundary based on the obtained position. The second lateral distance is here a stored reference distance. Furthermore, the control circuitry is configured to control a driver-assistance or autonomous driving feature based on the comparison between the determined first lateral distance and the corresponding second lateral distance. With this aspect of the disclosure, similar advantages and preferred features are present as in the previously discussed first aspect of the disclosure.

Still further, in accordance with a fourth aspect of the present disclosure, there is provided a vehicle comprising a localization system for monitoring a geographical position of the vehicle, a perception system comprising at least one sensor for monitoring a surrounding environment of the vehicle, and a control device according to any one of the embodiments disclosed in reference to the third aspect of the present disclosure. With this aspect of the disclosure, similar advantages and preferred features are present as in the previously discussed first aspect of the disclosure.

Moving on, in accordance with a fifth aspect of the present disclosure, there is provided a method for providing verification data for road model estimations. This aspect of the disclosure can be understood as the "server side" or "cloud side" of the previously discussed aspects of the disclosure. The method comprises receiving a first set of vehicle data from a first remote vehicle, the first set of vehicle data comprising a geographical position of the first remote vehicle and sensor data comprising a lateral distance between a road reference and a road boundary at an area associated with the geographical position of the first remote vehicle. The method further comprises storing the first set of vehicle data in order to form a stored reference lateral distance between the road reference and the road boundary, and receiving a second set of vehicle data from a second remote vehicle located in the area. The second set of vehicle data comprises a geographical position of the second remote vehicle. Further, the method comprises sending a signal to the second remote vehicle comprising information about the stored reference lateral distance between the road reference the road boundary. With this aspect of the disclosure, similar advantages and preferred features are present as in the previously discussed first aspect of the disclosure.

According to a sixth aspect of the present disclosure, there is provided (non-transitory) computer-readable storage medium storing one or more programs configured to be executed by one or more processors of a vehicle fleet management system, the one or more programs comprising instructions for performing the method according to any one of the embodiments discussed with respect to the fifth aspect of the present disclosure. With this aspect of the disclosure, similar advantages and preferred features are present as in the previously discussed fifth aspect of the disclosure.

Moving on, in accordance with a seventh aspect of the present disclosure, there is provided a method for providing a road model of a portion of a surrounding environment of a vehicle. The method comprises obtaining a geographical position of the vehicle from a localization system of the vehicle, and obtaining sensor data comprising spatial information about a road reference located in the surrounding environment of the vehicle. Furthermore, the method comprises obtaining a stored lateral distance between the road reference and a road boundary in the surrounding environment of the vehicle based on the geographical position of the vehicle and the sensor data, and controlling a driver-assistance or autonomous driving feature based on the obtained stored lateral distance.

The above presented method provides an efficient means for obtaining a road boundary representation in real-time in scenarios when the vehicle's own systems cannot generate a reliable lateral offset (e.g. due to weather conditions or corrupt sensor data). This may reduce the risk of accidental road departures or erroneous interventions by vehicle safety systems due to inaccurate road edge tracing as well as increase an availability of AD or ADAS features. The lateral distance from the traced road reference (e.g. lane marking) and the road boundary (e.g. road edge) may also be referred to as a "lateral offset" of the traced road reference. Stated differently, the lateral distance is obtained from a data repository containing "reference" values, and an AD or ADAS feature (e.g. a road departure mitigation system) can be controlled based on the obtained "reference" distance. Consequently, this may provide an increased availability and reliability for road edge tracking in ADAS and AD systems.

The present inventors realized that by providing sourced road geometry data in the form of lateral offsets between road references (e.g. lane markers) and a road boundary (e.g. road edge, road barrier, etc.) in scenarios where the vehicle is unable to detect or see the road boundary. For example, during winter, parts of the road surface may be covered by snow, in particular the road edge, wherefore it may be impossible for the vehicle's perception system to detect and trace the road edge. This may lead to unavailability of the vehicle's safety systems, missing interventions, and in some cases even erroneous interventions by the vehicle's safety systems. Thus, by means of the proposed method, the vehicle may utilize "sourced data" (i.e. data provided from other vehicles that have travelled on that particular road segment) containing information about the lateral offset between the road reference that that the vehicle is able to trace and the road boundary. Accordingly, increased availability and robustness is added to the road-modelling feature of the vehicle and the overall road safety is therefore improved.

Further, according to an eighth aspect of the present disclosure, there is provided a (non-transitory) computer-readable storage medium storing one or more programs configured to be executed by one or more processors of a vehicle control system, the one or more programs comprising instructions for performing the method according to any one of the embodiments discussed with respect to the seventh aspect of the disclosure. With this aspect of the disclosure, similar advantages and preferred features are present as in the previously discussed seventh aspect of the disclosure.

Further, according to a ninth aspect of the present disclosure there is provided a control device for providing a road model of a portion of a surrounding environment of a vehicle. The control device comprises control circuitry configured to obtain a geographical position of the vehicle from a localization system of the vehicle, and to obtain sensor data comprising spatial information about a road reference located in a surrounding environment of the vehicle. The control circuitry is further configured to obtain a stored lateral distance between the road reference and a road boundary in the surrounding environment of the vehicle based on the geographical position of the vehicle and the sensor data, and to control a driver-assistance or autonomous driving feature based on the obtained stored lateral distance. With this aspect of the disclosure, similar advantages and preferred features are present as in the previously discussed seventh aspect of the disclosure.

Still further, in accordance with a tenth aspect of the present disclosure, there is provided a vehicle comprising a localization system for monitoring a geographical position of the vehicle, a perception system comprising at least one sensor for monitoring a surrounding environment of the vehicle, and a control device according to any one of the embodiments disclosed in reference to the ninth aspect of the present disclosure. With this aspect of the disclosure, similar advantages and preferred features are present as in the previously discussed first aspect of the disclosure.

Further embodiments of the disclosure are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present disclosure will in the following be further clarified with reference to the embodiments described hereinafter.

BRIEF DESCRIPTION OF THE DRAWINGS

Further objects, features and advantages of embodiments of the disclosure will appear from the following detailed description, reference being made to the accompanying drawings, in which:

Fig. 1 is schematic flow chart representation of a method for providing a road model of a portion of a surrounding environment of a vehicle in accordance with an embodiment of the present disclosure.

Fig. 2 is schematic flow chart representation of sub-process of a method for providing a road model of a portion of a surrounding environment of a vehicle in accordance with an embodiment of the present disclosure.

Fig. 3 is schematic flow chart representation of sub-process of a method for providing a road model of a portion of a surrounding environment of a vehicle in accordance with an embodiment of the present disclosure.

Fig. 4 is a schematic side-view illustration of a vehicle comprising a control device for providing a road model of a portion of a surrounding environment of a vehicle in accordance with an embodiment of the present disclosure.

Fig. 5 is a series of schematic perspective view of a vehicle comprising a control device for providing a road model of a portion of a surrounding environment of a vehicle in accordance with an embodiment of the present disclosure.

Figs. 6a - 6b are schematic perspective view illustrations depicting a method for providing verification data for road boundary estimations in accordance with an embodiment of the present disclosure.

Fig. 7 is a schematic flow chart representation of a method for providing a road model of a portion of a surrounding environment of a vehicle in accordance with an embodiment of the present disclosure.

Fig. 8 is a schematic flow chart representation of a method for providing a road model of a portion of a surrounding environment of a vehicle in accordance with an embodiment of the present disclosure.

Fig. 9 is a schematic side-view illustration of a vehicle comprising a control device for providing a road model of a portion of a surrounding environment of a vehicle in accordance with an embodiment of the present disclosure.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

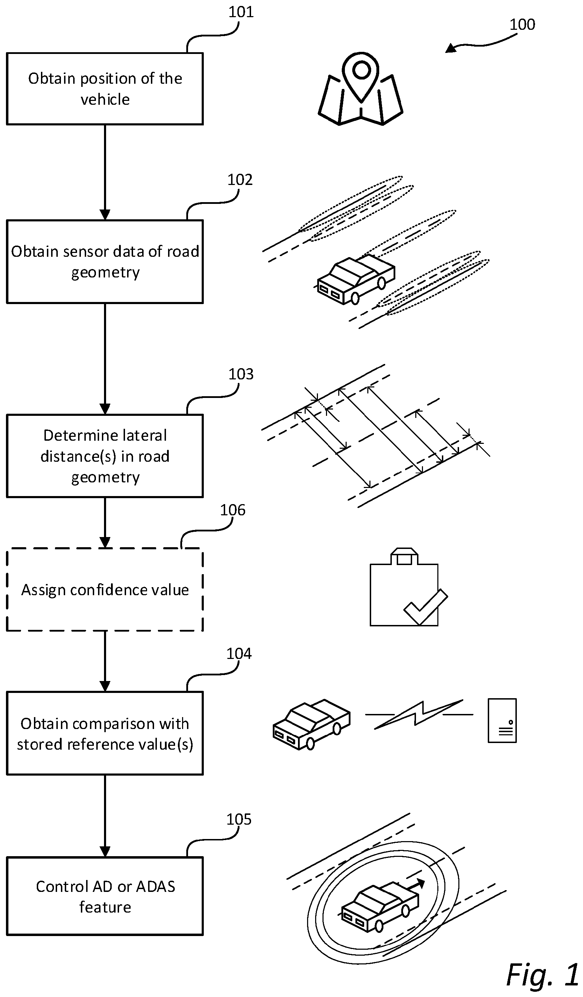

Fig. 1 is a schematic flow chart representation of a method 100 for providing a road model of a portion of a surrounding environment of a vehicle. Fig. 1 also includes schematic drawings to the right of each box 101 - 106, where the boxes represent various steps of the method and the drawings serve to supportively illustrate the various method steps. A road boundary is in the present context to be understood as an edge portion of the road and in may some contexts be referred to as a road edge. Nevertheless, a road boundary may in some exemplary embodiments be a road edge, a barrier, a curb, a ditch, or any other structure defining the edge portion of a drivable surface (i.e. the road). A road model may be understood as a representation of a drivable path in a surrounding environment of the vehicle, where the road model comprises lane tracing and road boundary tracing features. The term obtaining is herein to be interpreted broadly and encompasses receiving, retrieving, collecting, acquiring, and so forth.

The method comprises obtaining 101 a geographical position of the vehicle from a localization system of the vehicle. The localization system may be in the form of a Global Navigation Satellite System (GNSS), such as e.g. GPS, GLONASS, Beidou, Galileo, etc. However, the localization system may alternatively or additionally utilize other techniques such as odometry, Kalman filtering, particle filtering, Simultaneous Localization and Mapping (SLAM), or Real Time Kinematics (RTK). In more detail, the localization system may include a wireless communications device, such as a GPS. In one embodiment the vehicle receives a GPS satellite signal. As is understood, the GPS processes the GPS satellite signal to determine positional information (such as location, speed, acceleration, yaw, and direction, etc.) of the vehicle. As noted herein, the localization system is in communication with a control device, and is capable of transmitting such positional information regarding the vehicle to the controller control device.

The method 100 further comprises a step of obtaining 102 sensor data comprising spatial information about a road reference and a road boundary located in the surrounding environment of the vehicle. Spatial information about the road reference may for example include data of the road reference required to estimate a tracing or tracking of that road reference. Thus, the spatial information about the road reference can include positional data of the road reference in relation to a vehicle coordinate system or any other suitable coordinate system (e.g. GPS-coordinates). Stated differently, spatial information about the road reference may be understood as one or more parameters used in forming a road reference model as will be discussed in more detail in the following.

A perception system is in the present context to be understood as a system responsible for acquiring raw sensor data from on sensors such as cameras, LIDARs and RADARs, ultrasonic sensors, and converting this raw data into scene understanding. Naturally, the sensor data may be received 102 directly from one or more suitable sensors (such as e.g. cameras, LIDAR sensors, radars, ultrasonic sensors, etc.). A road reference is to be understood as a reference feature which can be used to estimate a geometry of the road in reference to the vehicle. The road reference may for example be a left lane marker, a right lane marker, a guidepost, a vehicle, a road boundary (i.e. the left road edge may be used to estimate the position of the right road edge), and so forth.

In reference to the road boundary being a "road reference", this can for example be the case in a scenario where the vehicle is traveling on a small rural road, without any other available road references. Then, in order to estimate the position of the right road boundary, one can use the left road boundary, and thereby estimate the width of the road in order to enable/disable certain AD or ADAS features (e.g. autonomous overtaking). Stated differently, one can verify the position of one road boundary based on the position of the other road boundary. Thus, if for example only the left road boundary is available locally (i.e. detectable by the vehicle's sensors), then the lateral distance between the left road boundary and the right road boundary can be stored and retrieved from the "cloud".

Moving on, the sensor data may comprise one or more detections of (e.g. images) of one or more road references. Moreover, a reference representation model can be formed for each road reference based on the received sensor data, the model can for example be in the form of a third order polynomial equation:

$$y_i = A_i x^3 + B_i x^2 + C_i x + D_i \qquad\qquad (1)$$

where i denotes the index of the road reference (e.g. left lane markers, right lane markers, a road edge, guideposts, other vehicles, etc.). The polynomial equation (1) describes a geometry of the associated road reference (e.g. lane marking) in the vehicle coordinate system. An alternative reference representation model is to describe the road reference geometry with a clothoid having a lateral offset ($\Delta L$) from the road boundary/edge, a heading ($\alpha$), a curvature ($c_0$), and a curvature rate ($c_1$). However, the road reference geometry modelled as a clothoid can be approximated by the following third order polynomial:

$$y(x) = \frac{c_1}{6} x^3 + \frac{c_0}{2} x^2 + \alpha x + \Delta L \qquad\qquad (2)$$

Thus, the reference components $A_i$, $B_i$, $C_i$, and $D_i$ can be considered to represent a curvature rate, a curvature, a heading, and a lateral offset to the road boundary, respectively.

Accordingly, the sensor data can be said to comprise information about a reference representation model of one or more road references in the surrounding environment of the vehicle.

Further, the method 100 comprises determining 103 a first lateral distance between the observed road reference and the observed road boundary. In other words, the step of determining the first lateral distance be understood as determining the reference component $D_i$ (i.e. the lateral offset) for the road reference "i" in relation to the road boundary. If the road reference is a road boundary (e.g. road edge), then this step can be construed as an estimation of the width of the road. The method 100 may further comprise a step of assigning 106 a confidence value to the determined 103 first lateral distance based on one or more predefined conditions. For example, the one or more predefined conditions may be environmental conditions (water, debris, snow on the road surface) may result in a reduced reliability of sensor measurements. Thus, the predefined condition may relate to the observation of the road reference and/or of the road boundary. The predefined condition may additionally or alternatively relate to sensor error margins, vehicle movement, and so forth.

Moving on, the method 100 comprises obtaining 104 a comparison between the determined first lateral distance and a corresponding second lateral distance between the (corresponding) road reference and the road boundary based on the obtained position of the vehicle. The second lateral distance is a stored reference distance. This step 104 may be understood as a verification of the observed/detected first lateral distance based on a stored reference distance that is assumed to constitute a "true value". The reference distance may either be stored locally in the vehicle (e.g. as a layer in HD map data) or remotely and accessible via an external network (e.g. stored in a cloud solution). Thus, the comparison may be performed locally by an in-vehicle system or remotely in the "cloud", in reference to the latter, the method may comprise uploading the sensor data may accordingly to the cloud. Moreover, the method 100 may comprise a step of obtaining (e.g. receiving from a remote data repository) the corresponding second lateral distance. This may for example be the case if the reference data (i.e. sourced lateral distances) is stored remotely but the comparison is performed locally.

According to an exemplary embodiment, the obtained sensor data includes at least one of a road reference type and a road reference identification (reference ID) for the identified/monitored road reference. For example, the sensor data may indicate that the identified/road reference is the left lane marker of the rightmost lane of the road segment that the vehicle is currently traveling on. Road reference type may be construed as a parameter describing the type of road reference (e.g. lane marker, guidepost, traffic sign, guard rail, etc.) while the road reference ID is more specific (e.g. right lane marker of the second lane from the right, or the left lane marker in the leftmost lane). This can be advantageous in order to facilitate the comparison between the measured lateral distance and the corresponding reference lateral distance (i.e. second lateral distance) so that the appropriate distances are compared. In other words, the determination of a road reference ID or road reference type serves to aid the comparing entity by classifying the available road reference so that the measured lateral distance between e.g. the right lane marker and the road boundary is compared with the stored reference distance between the right lane marker and the road boundary. Thus, the obtained 104 comparison is advantageously further based on at least one of the road reference type and the road reference ID.

Moreover, the method 100 may comprise receiving a reference ID of the stored reference data, i.e. which road reference's lateral offset relative to which road boundary that is comprised in the data repository (e.g. in the cloud). Accordingly, the obtained sensor data may be based on the received reference ID of the stored reference data. In more detail, the "vehicle" may track a road reference based on which reference data is available in that particular situation at that particular location. For example, if the data repository only contains reference data (i.e. stored lateral distances) for the left lane marker relative to the right road boundary, then the vehicle's perception system may be controlled to mainly focus on the left lane marker in order to measure the first lateral distance between the lateral lane marker and the right road boundary.

Furthermore, the obtained sensor data may further comprise (additional) road reference data such as e.g. whether the lane marker is solid or dashed, single or double, colour of the lane marker, type of lane marker (e.g. painted line or Bott's dot). Similarly, if the road reference is a road boundary the (additional) road reference data may further comprise a road boundary type (e.g. sidewalk, gravel, snow) or type of guardrail (e.g. concrete wall, wire railing, etc.). Furthermore, the sensor data may comprise meta data such as e.g. which sensor was used to detect the road reference, type of sensor used to detect the road reference, light conditions, weather information (rainfall, snowfall, temperature, humidity, etc.).

Next, a driver assistance feature or autonomous driving feature (i.e. an ADAS or AD feature) is controlled 105 based on the comparison. For example, the comparison may show that the first lateral distance deviates from the second lateral distance, which may be used as an indication that a diagnostic test of the vehicle's perception system should be initiated and AD or ADAS features relying on accurate lateral distance observations may be suppressed. Additionally, or alternatively, if a "local" measurement of the lateral distance that deviates from the "reference" lateral distance (i.e. second lateral distance) one can refrain from updating the "local" model of the road geometry in the associated time step. However, if the comparison 104 indicates that the determined 103 first lateral distance is within a confidence range, the AD or ADAS feature(s) may use the determined lateral distance (which has now been verified) as a control parameter, and the overall road safety can be improved.

The above discussed method 100 serves a purpose of verifying a road boundary representation (e.g. road edge tracing) of an in-vehicle system by comparing sensor data (i.e. a perceived environment) with reference data (i.e. sourced data) in real-time in order to reduce the risk of accidental road departures or erroneous interventions by vehicle safety systems due to inaccurate road edge representations. The lateral distance from a detected road reference (e.g. lane marking) and a detected road boundary (e.g. road edge) is the parameter used as a key parameter in the present disclosure. In more detail, the "perceived" lateral distance is compared with a reference value (which can be stored locally or remotely in the "cloud"), in order to verify the vehicle's own sensor readings and then control an AD or ADAS feature (e.g. a road departure mitigation system) based on the verification result.

The reference value, i.e. the second lateral distance is a stored reference distance, preferably comprising a plurality of measurements from different vehicles. Thus, the second lateral distance can in some embodiments be in the form of an average value of a plurality of different measurements, where a vehicle having suitable sensors and communication equipment provides each measurement. Each measurement can furthermore be provided with an assigned quality value in order to build the reference distance as a weighted average, where the weights depend on the assigned quality value.

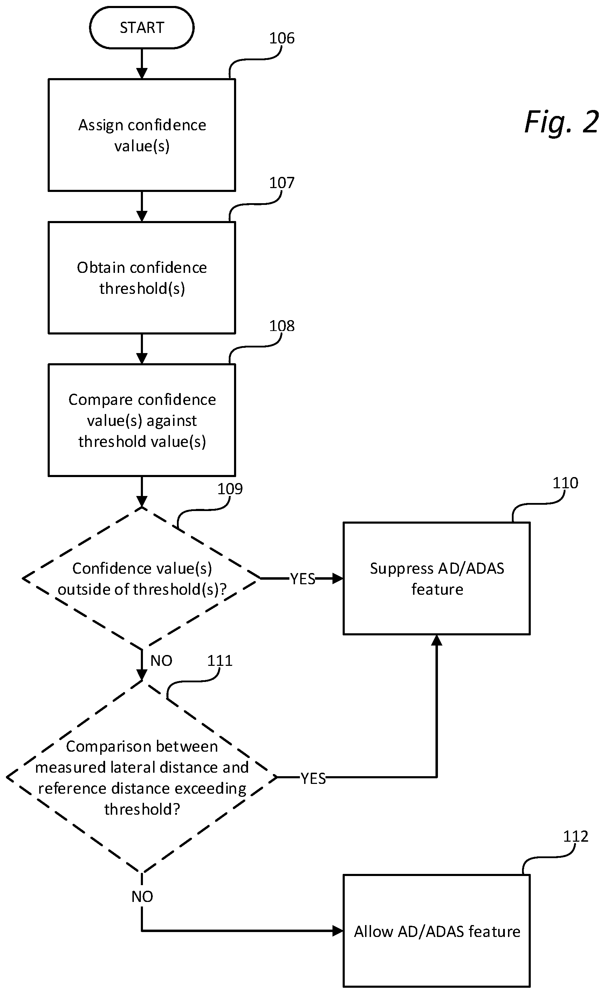

Fig. 2 illustrates a schematic flow chart representation of a sub-process of a method for providing a road model of a portion of a surrounding environment of a vehicle. The illustrated sub-process can be construed as an exemplary embodiment of the method discussed in reference to Fig. 1. More specifically, the sub-process illustrated in Fig. 2 includes further method steps related to the step of assigning 106 a confidence value to the measured/determined first lateral distance based on one or more predefined conditions. Accordingly, the method further comprises obtaining 107 one or more confidence thresholds, i.e. threshold values related to the assigned 106 confidence values, and comparing 108 the assigned confidence value(s) to the predefined confidence thresholds. The step of controlling the driver-assistance feature (ADAS feature) or the autonomous driving (AD) feature is accordingly further based on this comparison 108.

In more detail, the method comprises suppressing 110 the ADAS/AD feature if at least one of the two following conditions 109, 111 are true. Namely, if the assigned confidence value for the determined first lateral distance is below the predefined confidence threshold, or if the comparison between the determined first lateral distance and the corresponding second lateral distance indicates that a difference between the determined first lateral distance and the obtained second lateral distance is above a first predefined threshold. In other words, the ADAS/AD feature is suppressed 110 if the reliability of the measurement of the first lateral distance is questionable, or if the comparison with the reference value (second lateral distance) directly shows that the measurement of the first is erroneous. Analogously, the method may comprise a step of allowing 112 the AD/ADAS feature to be activated or stay active if both conditions 109, 111 are fulfilled.

In summary, the embodiment discussed in the foregoing with reference to Fig. 2 adds further robustness to the in-vehicle road edge tracing by verifying 109, 111 the accuracy of the determined first lateral distance in two explicit and independent steps, thereby improving robustness of the road modelling feature of the vehicle.

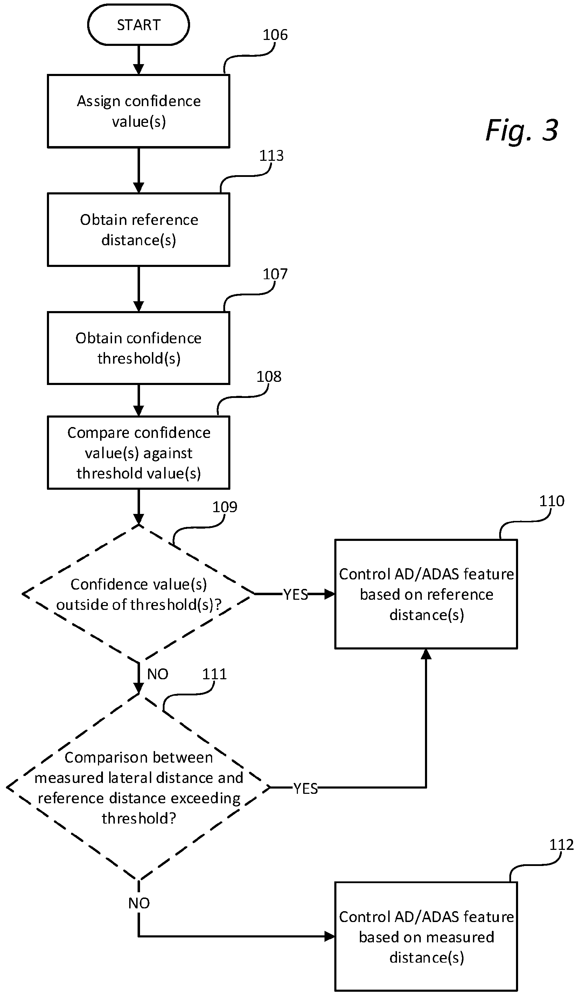

Fig. 3 is another schematic flow chart representation of a sub-process of a method for providing a road model of a portion of a surrounding environment of a vehicle. Similarly, as in the process discussed with reference to Fig. 2, the illustrated sub-process of Fig. 3 can be construed as an exemplary embodiment of the method discussed in reference to Fig. 1. More specifically, the sub-process illustrated in Fig. 3 includes further method steps related to the step of assigning 106 a confidence value to the measured/determined first lateral distance based on one or more predefined conditions.

Accordingly, the method further comprises obtaining 113 the corresponding one or more second lateral distances as well as obtaining 107 confidence thresholds for the first lateral distances. As mentioned, the term obtaining is herein to be interpreted broadly and encompasses "passively" receiving or "actively" retrieving the confidence thresholds from the perception system, the associated sensors, or determining the confidence thresholds in a separate unit based on a computational model in the separate unit. The confidence thresholds may be dynamic and depend on one or more further parameters such as a geographical location of the vehicle, a vehicle speed, a traffic density, a time of day, etc.

Accordingly, the assigned 106 confidence value(s) are compared 108 against corresponding threshold value(s). Analogously as in the embodiment discussed in reference to Fig. 2, the method includes checking 109, 111 if the confidence value(s) exceed the threshold values, or if the comparison between the determined first lateral distance and the second lateral distance indicates that the first lateral distance is wrong. However, based on these comparisons, the AD/ADAS feature can be controlled 110 based on the obtained 113 second lateral distance, or controlled 112 based on the (now verified) first lateral distance.

In reference to the first alternative, i.e. using the obtained 113 second lateral distance as a control parameter, the step of controlling the ADAS or AD feature then comprises applying the obtained second lateral distance as a control parameter for the driver-assistance or autonomous driving feature at least temporarily. This may for example be useful if the in-vehicle systems cannot estimate the lateral distance between the road reference and a road boundary and thus not generate a reliable road model, and the AD/ADAS feature is provided with the possibility to utilize the stored reference distance temporarily. The obtained 113 second lateral distance can be understood as a stored reference distance and may for example be a sourced distance aggregated from a plurality of measurements made by other vehicles.

Executable instructions for performing the above discussed functions are, optionally, included in a non-transitory computer-readable storage medium or other computer program product configured for execution by one or more processors.

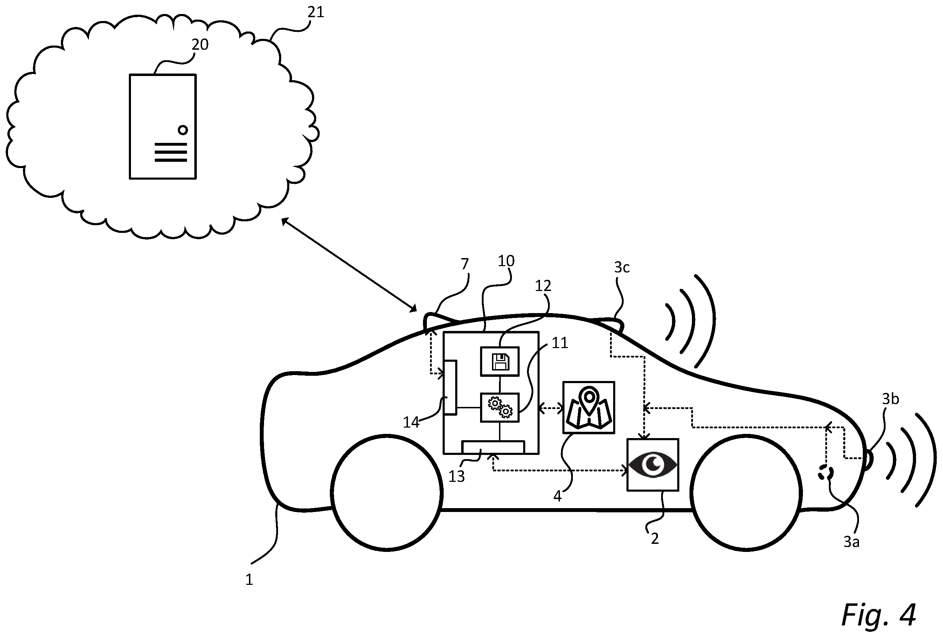

Fig. 4 is a schematic side view of a vehicle 1 comprising a control device 10 for providing a road model of a portion of a surrounding environment of a vehicle. The vehicle 1 further comprises a perception system 2 and a localization system 4. A perception system 2 is in the present context to be understood as a system responsible for acquiring raw sensor data from on sensors 3a, 3b, 3c such as cameras, LIDARs and RADARs, ultrasonic sensors, and converting this raw data into scene understanding. The localization system 4 is configured to monitor a geographical position and heading of the vehicle, and may in the form of a Global Navigation Satellite System (GNSS), such as a GPS, Beidou, Galileo, or GLONASS. Furthermore, the localization system may be realized as a Real Time Kinematics (RTK) GPS in order to improve accuracy.

The perception system 2 comprises a plurality of sensors 3a-3c (e.g. cameras, LIDARs, RADARs, ultrasound transducers, etc.). The sensors 3a-3c are configured to acquire information representative of a surrounding environment of the vehicle. In more detail, the perception system comprises sensors suitable for tracking one or more road references (e.g. lane markings, road edges, other vehicles, landmarks, etc.) in order to estimate a road geometry and in particular a road boundary of the travelled upon road.

The control device 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for providing a road model of a portion of a surrounding environment of a vehicle according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to obtain a geographical position of the vehicle (or data comprising information about a geographical position of the vehicle 1) from the localization 4 of the vehicle 1. The geographical position may be in the form of a set of geographical coordinates (e.g. GPS coordinates) and a heading of the vehicle 1. The control circuitry 11 is further configured to obtain sensor data comprising spatial information about one or more road references (e.g. lane markers) and a road boundary (e.g. road edge) located in the surrounding environment of the vehicle 1. The sensor data may be provided by the perception system 2 of the vehicle. Next, the control circuitry is configured to determine a first lateral distance between each road reference and the road boundary.

Further, the control circuitry 11 is configured to obtain a comparison between each determined first lateral distance and each corresponding second lateral distance between the road reference and the road boundary based on the obtained position and optionally based on the sensor data. The second lateral distance is to be understood as a stored reference distance. In other words, the control circuitry 11 obtains a reference lateral distance between each suitable road reference and a road boundary in the current geographical position of the vehicle. The term obtain is in the present context to be interpreted broadly and encompasses passively receiving, actively retrieving, or receiving upon a request, and any other suitable way to acquire a specific set of data.

Then, the control circuitry 11 is configured to control a driver-assistance or autonomous driving feature based on the comparison between the determined first lateral distance and the corresponding second lateral distance. The term control a driver-assistance feature or autonomous driving feature is considered to encompass both direct control and indirect control (i.e. sending a signal to a different vehicle control system that is directly responsible for executing an AD or ADAS feature).

Further, the vehicle 1 may be connected to external network(s) 21 via for instance a wireless link (e.g. for retrieving map data). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly or via dedicated sensor control circuitry 2 in the vehicle. The communication/antenna interface 13 may further provide the possibility to send output to a remote location (e.g. remote operator or control centre) by means of the antenna 7. Moreover, some sensors in the vehicle may communicate with the control device 10 using a local network setup, such as CAN bus, I2C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

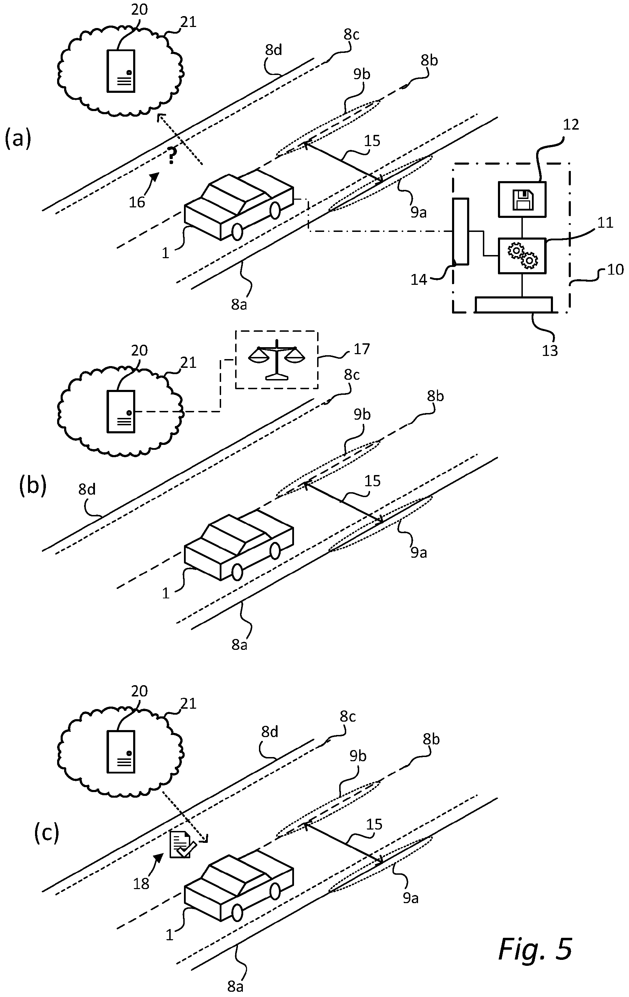

Fig. 5 shows a series of perspective view illustrations (a) - (c) of a vehicle 1 comprising a control device for providing a road model of a portion of a surrounding environment of a vehicle 1. The series of illustrations (a) - (c) serve to elucidate a verification process in which the control device is arranged to monitor the centre lane markers 8b and the right road boundary 8a and to determine a lateral distance 15 between the two. This lateral distance is then compared/verified against a stored reference value (indicated by ref. 17) in order to increase an integrity level of the road boundary tracing. Stated differently, the lateral offset of the traced road reference 8b is verified against a stored "ground truth".

In the top-most illustration, i.e. drawing (a), the control device 10 of the vehicle 1 obtains a geographical position of the vehicle (provided by for example a GPS unit of the vehicle 1), and sensor data. Naturally, the geographical position of the vehicle 1 may be provided by other means such as a real time kinematics (RTK) GPS unit, HD map data in combination with landmark measurements, and so forth. The sensor data comprises spatial information about a road reference 8a - 8d and a road boundary 8a, 8d as indicated by reference numeral 9a, 9b. As previously mentioned, the term road reference encompasses a road boundary/edge since in some situations it may be desirable to determine a lateral distance between two road edges 8a, 8d. The measured lateral distance 15 is then sent to a remote entity 20 via an external network (e.g. cellular network) 21 for verification as indicated by the question mark 16. Even though the verification performed remotely i.e. in the "cloud" in the illustrated embodiment, the verification may alternatively be performed locally in the vehicle 1. In more detail, the vehicle may comprise a local data repository comprising stored "reference distances" e.g. in the form of a layer in an HD map. However, an advantage with the "cloud" solution is that vehicles connected to the same system can regularly update the lateral distances 15, while the local data repository can for example be updated at predefined scenarios (e.g. during service of the vehicle). In the latter embodiment, the control circuit may be configured to retrieve the corresponding second lateral distance, and then verify the measured value 15 by comparing the two distances.

The verification comprises a comparison between the determined first lateral distance 15 and a corresponding second lateral distance (i.e. a stored reference distance) as indicated by reference numeral 17.

In the bottom drawing, i.e. illustration (c), the vehicle 1 receives a verification of the reliability of the determined first lateral distance as indicated by reference numeral 18, and the control device 10 can use the determined first lateral distance 15 as a control parameter for an AD or ADAS feature (such as e.g. a road departure mitigation system). Analogously, if the comparison 17 would have indicated that determined first lateral distance 15 was outside of one or more predefined thresholds, the AD or ADAS feature(s) can be suppressed and the driver prompted to take over control of the vehicle 1.

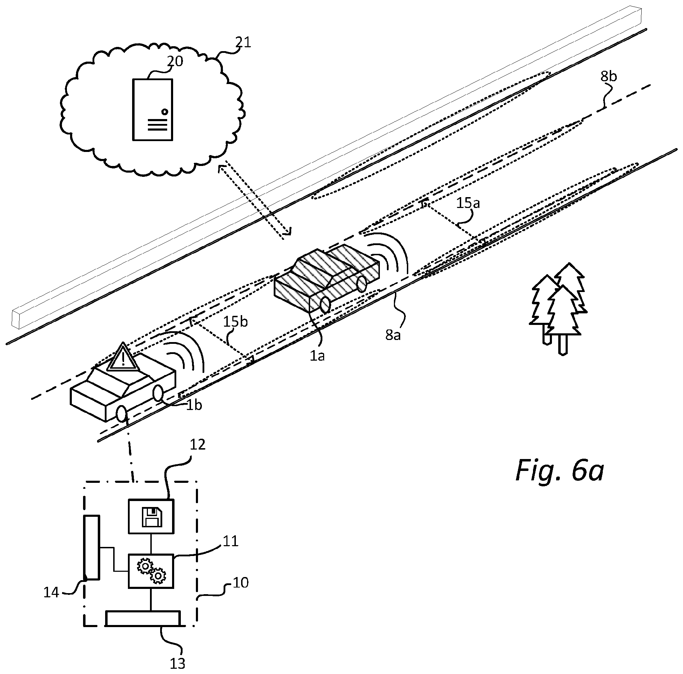

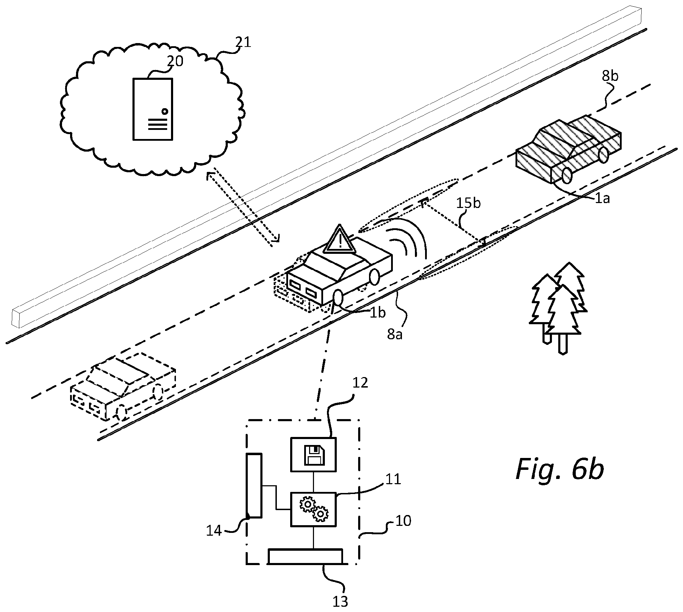

Fig. 6a and 6b are perspective view illustrations of two vehicles 1a, 1b traveling on a road segment, where each vehicle 1a, 1b is connected to the same system 20 configured to provide verification data for road model estimations. More specifically, the two figures 6a and 6b serve to illustrate a method for providing verification data for road boundary estimations in accordance with an embodiment of the present disclosure. Thus, the two vehicles 1a preferably comprise a control circuit 10 as discussed in the foregoing (only one is shown in order to avoid cluttering). The remote system 20 is preferably provided with suitable hardware and software (control circuitry, memory, communication circuitry, etc.) for executing the process described in the following.

In more detail, Fig. 6a shows a first vehicle 1a monitoring a road geometry ahead as indicated by the broken lines. Furthermore, the first vehicle 1a is in communication with cloud system 20 via an external network 21 in order to send and receive data to/from a remote data repository 20. In other words, the first vehicle 1a identifies a first lateral distance between the centre lane marker 8b of the road and the right road boundary 8a as indicated by the broken double-headed arrow 15a. Stated differently, the first vehicle 1a determines a lateral offset of the road reference model associated with the centre lane markers with respect to the road boundary. The first vehicle's control device (not shown) is arranged to verify this detection 15a by sending data comprising information about the determined first lateral distance 15a to the remote entity 20. This process has already been discussed in the foregoing in reference to Fig. 5, and will for the sake of brevity not be further elaborated upon.

Moving on, at the "cloud side" or "system side", a first set of vehicle data is received from a first remote vehicle 1a. The first set of vehicle data comprises a position (i.e. geographical coordinates or map position) of the first remote vehicle 1a and sensor data comprising a lateral distance between 15a a road reference and a road boundary at a geographical area associated with the position of the first remote vehicle. The first set of vehicle data is then stored in order to form a stored reference lateral distance between the road reference and the road boundary. The vehicle data may further comprise a confidence value associated with the received lateral distance 15a, whereby the reference distance can be generated based on a weighted sum of "sourced" lateral distances from a plurality of remote vehicles 1a, 1b. Thus, the system side 20 does not only serve the purpose of verifying real-time estimations of the lateral distances, but also to aggregate a plurality of measurements in order to form a reference distance that can be used for at least two purposes. Namely, either to be compared with a vehicle's own estimation of the lateral distance (i.e. for verification purposes), or to be sent to a remote vehicle and used by the same in scenarios when a vehicle's internal systems or components are malfunctioning.

Further, in Fig. 6b illustrating a subsequent time step, both vehicles 1a, 1b have travelled forward, and the second vehicle 1b is now at approximately the same position as the first vehicle 1a was in Fig. 6a. The remote system 20 is further configured to receive a second set of vehicle data from the second remote vehicle 1b (which is now located in the same geographical area as the first vehicle 1a was previously). The second set of vehicle data comprises at least information about a geographical position of the second remote vehicle. Furthermore, the remote system 20 is configured to send a signal to the second remote vehicle 1b (e.g. via an external communication network 21), where the signal comprises information about the stored reference lateral distance between the road reference 8a and the road boundary 8b. However, naturally the second set of vehicle data may further comprise information about a determined lateral distance 15b between the road reference and the road boundary if the second vehicle manages to estimate a lateral distance 15b. The lateral distance 15b being determined by means of a control device 10 of the second vehicle 1b.

Thus, the information about the stored reference lateral distance may be in the form of data comprising a direct value or metric of the distance, or information about a comparison between the (by the second remote vehicle 1b) determined lateral distance 15b and the stored reference lateral distance. This can depend on the application or scenario, e.g. if the comparison is to be done locally in the vehicle or by the remote system 20, or if the second vehicle 1b is unable to determine a lateral distance 15b. In a first case, where the remote system 20 sends information about a comparison between the determined lateral distance 15b and the stored reference lateral distance, a verification process is provided. In other words, the remote system 20 enables the second vehicle 1b to use aggregated measurements of other vehicles 1a in order to verify its own measurement 15b.

In the second case, the remote system 20 sends the stored reference lateral distance value to the second vehicle 1b, and an improved of robustness and reliability for a road modelling module of the second vehicle 1b is provided. In other words, if the second vehicle 1b for some reason is unable to determine a lateral distance between a road reference 8b and a road boundary 8a, the stored reference lateral distance can be used at least temporarily by a control system of the second vehicle 1b in order to manoeuvre the vehicle safely.

Executable instructions for performing the above discussed functions are, optionally, included in a non-transitory computer-readable storage medium or other computer program product configured for execution by one or more processors.

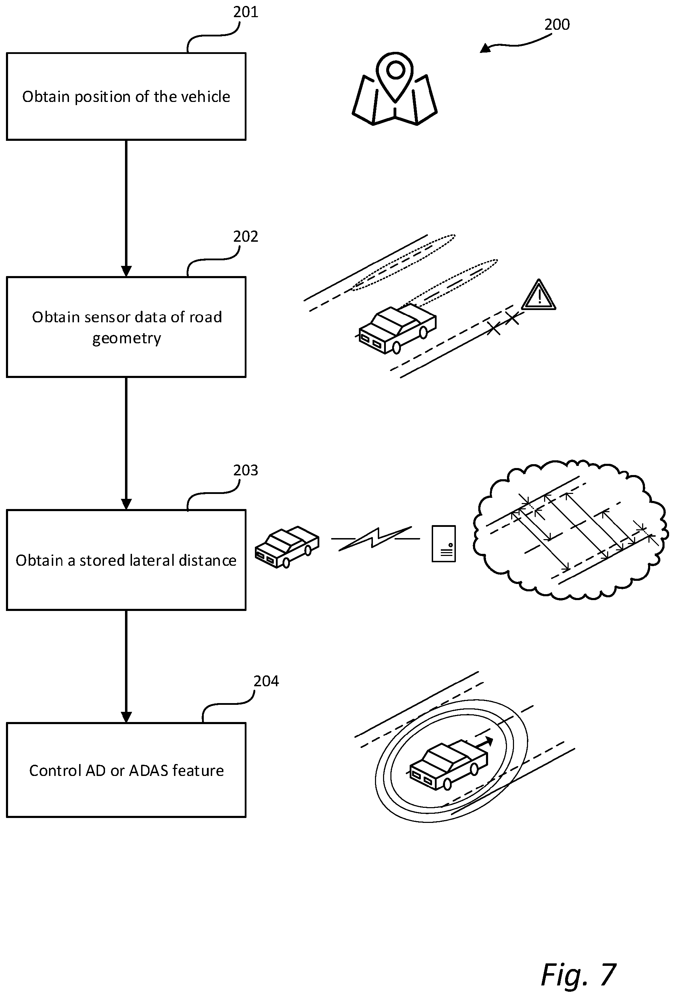

Fig. 7 illustrates a schematic flow chart representation of a method 200 for providing a road model of a portion of a surrounding environment of a vehicle. Fig. 7 also includes schematic drawings to the right of each box 202 - 204, where the boxes represent steps of the method 200 and the drawings serve to supportively illustrate the various method steps. A road model may be understood as a representation of a drivable path in a surrounding environment of the vehicle, where the road model comprise lane tracing and road boundary tracing features. A road boundary is in the present context to be understood as an edge portion of the road and may in some contexts be referred to as a road edge. Nevertheless, a road boundary may in some exemplary embodiments be a road edge, a barrier, a curb, a ditch, or any other structure defining the edge portion of a drivable surface (i.e. the road).

The method comprises obtaining 201 a geographical position of the vehicle from a localization system of the vehicle. The localization system may be in the form of a Global Navigation Satellite System (GNSS), such as e.g. GPS, GLONASS, Beidou, Galileo, etc. However, the localization system may alternatively or additionally utilize other techniques such as odometry, Kalman filtering, particle filtering, Simultaneous Localization and Mapping (SLAM), or Real Time Kinematics (RTK). In more detail, the localization system may include a wireless communications device, such as a GPS. In one embodiment the vehicle receives a GPS satellite signal. As is understood, the GPS processes the GPS satellite signal to determine positional information (such as location, speed, acceleration, yaw, and direction, etc.) of the vehicle. As noted herein, the localization system is in communication with a control device, and is capable of transmitting such positional information regarding the vehicle to the controller control device.

The method 200 further comprises a step of obtaining 202 sensor data comprising spatial information about a road reference located in the surrounding environment of the vehicle. A position of the road reference is in the present context to be understood as positional data of the road reference required to estimate a tracing or tracking of that road reference. Thus, the position of the road reference may be in relation to a vehicle coordinate system, or transformed into any other suitable coordinate system (e.g. GPS-coordinates). Stated differently, spatial information about the road reference may be understood as one or more parameters used in forming a road reference model as discussed in the foregoing, and as will be discussed in more detail in the following.

A perception system is in the present context to be understood as a system responsible for acquiring raw sensor data from on sensors such as cameras, LIDARs and RADARs, ultrasonic sensors, and converting this raw data into scene understanding. Naturally, the sensor data may be received 202 directly from one or more suitable sensors (such as e.g. cameras, LIDAR sensors, radars, ultrasonic sensors, etc.). A road reference is to be understood as a reference feature which can be used to estimate a road geometry in reference to the vehicle. The road reference may for example be a left lane marker, a right lane marker, a guidepost, a vehicle, a road boundary (i.e. the left road edge may be used to estimate the position of the right road edge), and so forth.

In reference to the road boundary being a "road reference", this can be for example be the case in a scenario where the vehicle is traveling on a small rural road, without any other available road references. Then, in order to estimate the position of the right road boundary, one can use the left road boundary, and thereby estimate the width of the road in order to enable/disable certain AD or ADAS features (e.g. autonomous overtaking).

Thus, the sensor data may comprise one or more detections of (e.g. images) of various road references. Moreover, a reference representation model can be formed for each road reference based on the received sensor data, the model can for example be in the form of a third order polynomial equation (1) as described in the foregoing.

The polynomial equation (1) describes a geometry of the associated road reference (e.g. lane marking) in the vehicle coordinate system. An alternative reference representation model is to describe the road reference geometry with a clothoid having a lateral offset ($\Delta L$) from the road boundary/edge, a heading ($\alpha$), a curvature ($c_0$), and a curvature rate ($c_1$). However, the road reference geometry modelled as a clothoid can be approximated by the following third order polynomial (2) described in the foregoing. Thus, the reference components $A_i$, $B_i$, $C_i$, and $D_i$ can be considered to represent a curvature rate, a curvature, a heading, and a lateral offset, respectively.

Accordingly, the sensor data can be said to comprise information about a reference representation model of one or more road references in the surrounding environment of the vehicle.

Next, the corresponding second lateral distance(s) (i.e. one or more stored reference distances) is/are obtained 203. The term obtain is herein to be interpreted broadly and encompasses receive, retrieve, collect, acquire, and so forth. Stated differently, the method 200 further comprises obtaining 203 a stored second lateral distance between the road reference (monitored by the perception system's sensors) and a road boundary in the surrounding environment of the vehicle based on the position of the vehicle and the sensor data. Moreover, the sensor data may further comprise a road reference type or a road reference identification (ID) for the detected/traced road reference.

The road reference ID may comprise information necessary for concluding what road reference is being traced (e.g. middle lane marker, right lane marker of the third lane from the left, the centre solid line lane marker, etc.). Road reference type may be construed as a parameter describing the type of road reference (e.g. lane marker, guidepost, traffic sign, guardrail, etc.) while the road reference ID is to some extent more specific (e.g. right lane marker of the second lane from the right, or the left lane marker in the leftmost lane). Accordingly, the step of obtaining 203 the stored second lateral distance may be further based on the road reference type and/or the road reference ID.

Furthermore, the obtained sensor data may further comprise (additional) road reference data such as e.g. whether the lane marker is solid or dashed, single or double, colour of the lane marker, type of lane marker (e.g. painted line or Bott's dot). Similarly, if the road reference is a road boundary the (additional) road reference data may further comprise a road boundary type (e.g. sidewalk, gravel, snow) or type of guardrail (e.g. concrete wall, wire railing, etc.). Furthermore, the sensor data may comprise meta data such as e.g. which sensor was used to detect the road reference, type of sensor used to detect the road reference, light conditions, weather information (rainfall, snowfall, temperature, humidity, etc.).

Further, the reference distance may either be stored locally in the vehicle (e.g. as a layer in HD map data) or remotely and accessible via an external network (e.g. stored in a cloud solution). Thus, the step of obtaining 203 the stored lateral distance may comprise retrieving, from a local data repository, the stored lateral distance between the road reference and the road boundary based on the position of the vehicle and the sensor data.

However, in accordance with another exemplary embodiment, the method 200 may further comprise sending the obtained geographical position of the vehicle and the sensor data to a remote data repository. Thus, the step of obtaining 203 the stored (second) lateral distance may comprise receiving, from the remote data repository (may also be referred to as a remote entity), the stored (second) lateral distance between the road reference and the road boundary based on the geographical position of the vehicle and the sensor data.

Moving on, the method 200 comprises controlling 204 an ADAS or AD Feature based on the obtained stored (second) lateral distance. More specifically, the step of controlling 204 the ADAS or AD feature may comprise applying the obtained stored lateral distance as a control parameter for the driver-assistance or autonomous driving feature during a predefined time period. This may for example be useful if the in-vehicle systems cannot estimate the lateral distance between the road reference and a road boundary (i.e. the lateral offset of the road reference) and thus not generate a reliable road model. Accordingly, the vehicle is provided with the possibility to utilize the stored reference distance temporarily. The stored reference distance may for example be a sourced distance aggregated from a plurality of measurements made by other vehicles. The AD or ADAS feature may operate based on the stored reference distance until the vehicle is stopped or the AD/ADAS feature may be suppressed when a time counter reaches a threshold value.

The above presented method 200 allows for providing sourced road geometry data in the form of lateral offsets between road references (e.g. lane markers) and a road boundary (e.g. road edge, road barrier, etc.) in scenarios where the vehicle is unable to detect or see the road boundary. For example, during winter parts of the road surface may be covered by snow, in particular the road edge, wherefore it may be impossible for the vehicle's perception system to detect and trace the road edge. This may lead to erroneous interventions by the vehicle's safety systems.

Thus, by means of the proposed method 200, the vehicle may utilize "sourced data" (i.e. data provided from other vehicles that have travelled on that particular road segment) containing information about the lateral offset between the road reference that that the vehicle is able to trace and the road boundary. Accordingly, robustness is added to the road modelling feature of the vehicle and the overall road safety is therefore improved.

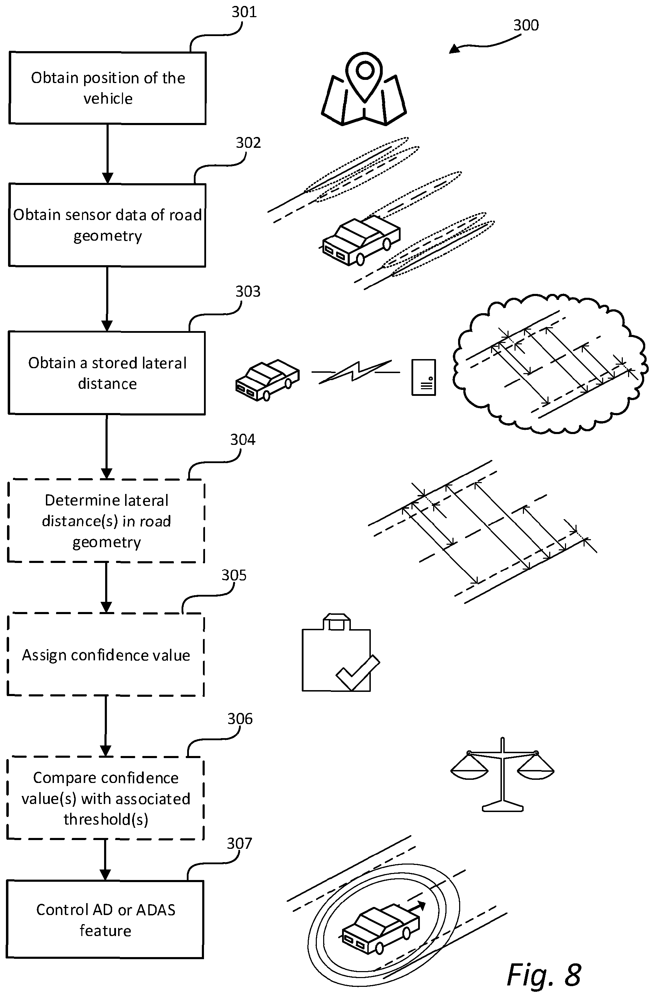

Moving on, Fig. 8 illustrates a schematic flow chart representation of a method for providing a road model of a portion of a surrounding environment of a vehicle. Some of the methods are the same or similar as discussed in reference to the flow chart of Fig. 7 in the foregoing, and will for the sake of brevity and conciseness not be discussed in explicit detail again.

The method 300 comprises obtaining 301 a geographical position of the vehicle from a localization system of the vehicle, obtaining 302 sensor data comprising spatial information about a road reference located in the surrounding environment of the vehicle. Moreover, in the illustrated example embodiment of Fig. 8, the sensor data further comprises spatial information about a road boundary located in the surrounding environment. As mentioned, a road boundary is in the context of the present disclosure to be understood as an edge portion of the drivable surface and in some contexts be referred to as a road edge.

Further, the method 300 comprises obtaining 303 a stored lateral distance between the road reference (monitored by the perception system's sensors) and a road boundary in the surrounding environment of the vehicle based on the position of the vehicle and the sensor data. As mentioned, the stored lateral distance can be understood as a type of reference distance that can be based on a plurality of measurements performed by a plurality of different vehicles.

Further, the method 300 optionally comprises (as indicated by the dashed box) determining 304 a lateral distance between the detected/monitored one or more road references and the detected/monitored one or more road boundaries. In other words, the method 300 may comprise determining a "lateral offset" of the traced road reference from the road boundary.

Next, the method 300 comprises assigning 305 a confidence value for the spatial information about the road reference and/or the road boundary based on one or more predefined conditions. In other words, the method 300 comprises determining a reliability of the measurement or tracing of the road reference and/or the road boundary. For example, the road conditions may be bad heavy/snow rain and it may be difficult to accurately estimate a geometrical model of the road reference and/or the road boundary wherefore a "low" confidence value may be assigned 305. Thus, the one or more predefined conditions may depend on one or more environmental factors (weather, traffic density, etc.), the vehicle's movement parameters, sensor quality, and so forth.

Further, the confidence value(s) is/are compared 306 with associated predefined confidence threshold(s). Then, based on this comparison 306 the obtained 303 stored lateral distance(s) is/are applied 307 as control parameter(s) for the ADAS or AD feature for a predefined period of time if the confidence value(s) is/are below the predefined confidence threshold(s). Additionally, or optionally, one or more second confidence value may be assigned to the determined 304 first lateral distance(s). Similarly, the comparison may be done with respect to the second confidence value(s) and associated predefined confidence threshold(s). Analogously, the obtained stored lateral distance may be applied 307 as a control parameter for the driver-assistance or autonomous driving feature during a predefined time period if the second confidence value is below the second predefined confidence threshold.

Alternatively, the driver-assistance or autonomous driving feature may be controlled 307 based on a fusion of the obtained 320 sensor data and the obtained 303 stored lateral distance. In more detail, the method 300 may comprise a step of fusing (not shown) the "local" data (sensor data) and the "cloud" data (stored lateral distance) in order to determine the lateral offset between the tracked road reference and the road boundary. In this scenario, both data sets (local and cloud) are used simultaneously, and may for example be weighted according to some predefined model.

Executable instructions for performing the above discussed functions are, optionally, included in a non-transitory computer-readable storage medium or other computer program product configured for execution by one or more processors.

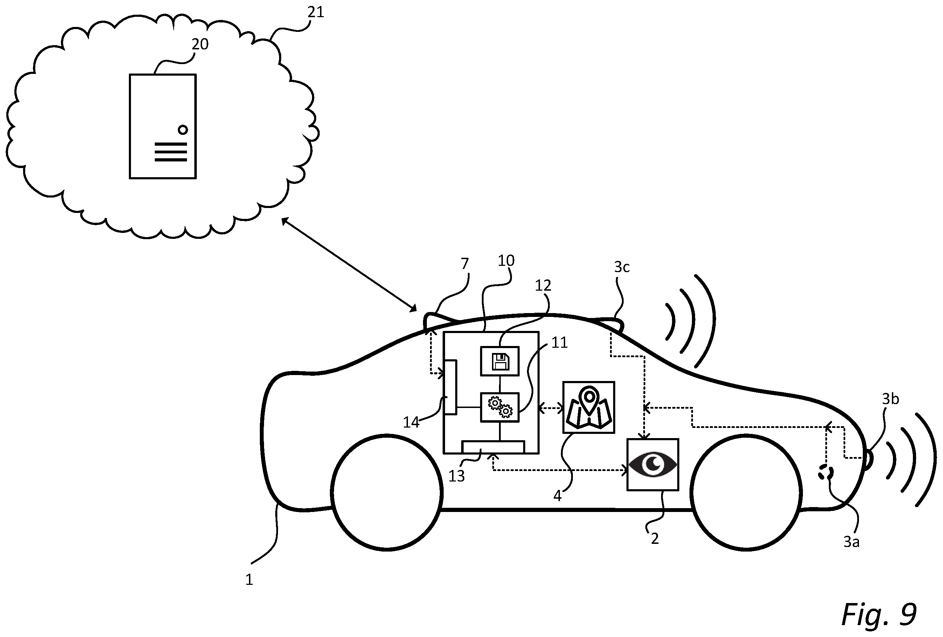

Fig. 9 is a schematic side view of a vehicle 1 comprising a control device 10 for providing a road model of a portion of a surrounding environment of a vehicle. The vehicle 1 further comprises a perception system 2 and a localization system 4. A perception system 2 is in the present context to be understood as a system responsible for acquiring raw sensor data from on sensors 3a, 3b, 3c such as cameras, LIDARs and RADARs, ultrasonic sensors, and converting this raw data into scene understanding. The localization system 4 is configured to monitor a geographical position and heading of the vehicle, and may in the form of a Global Navigation Satellite System (GNSS), such as a GPS, Beidou, Galileo, or GLONASS. Furthermore, the localization system may be realized as a Real Time Kinematics (RTK) GPS in order to improve accuracy.

The perception system 2 comprises a plurality of sensors 3a-3c (e.g. cameras, LIDARs, RADARs, ultrasound transducers, etc.). The sensors 3a-3c are configured to acquire information representative of a surrounding environment of the vehicle. In more detail, the perception system comprises sensors suitable for tracking one or more road references (e.g. lane markings, road edges, other vehicles, landmarks, etc.) in order to estimate a road geometry and in particular a road boundary of the travelled upon road.

The control device 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for providing a road model of a portion of a surrounding environment of a vehicle according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to obtain a geographical position of the vehicle (or data comprising information about a geographical position of the vehicle 1) from the localization 4 of the vehicle 1. The geographical position may be in the form of a set of geographical coordinates (e.g. GPS coordinates) and a heading of the vehicle 1. The control circuitry 11 is further configured to obtain sensor data comprising spatial information about one or more road references (e.g. lane markers) located in the surrounding environment of the vehicle 1. The sensor data may be provided by the perception system 2 of the vehicle. Next, the control circuitry is configured to obtain a stored lateral distance between the road reference and a road boundary based on the geographical position of the vehicle and the sensor data.

Further, the control circuitry 11 is configured to control a driver-assistance or autonomous driving feature (i.e. ADAS or AD) based on the obtained stored lateral distance. More specifically, the control circuitry 11 is configured to apply (directly or indirectly) the obtained stored lateral distance as a control parameter for the driver-assistance or autonomous driving feature during a predefined time period. This may for example be useful if the in-vehicle systems 2 cannot estimate the lateral distance between the road reference and a road boundary (i.e. the lateral offset of the road reference) and thus not generate a reliable road model. Accordingly, the vehicle 1 is provided with the possibility to utilize the stored reference distance temporarily. The stored reference distance may for example be a sourced distance aggregated from a plurality of measurements made by other vehicles. The AD or ADAS feature may operate based on the stored reference distance until the vehicle is stopped or the AD/ADAS feature may be suppressed when a time counter reaches a threshold value.

Further, the vehicle 1 may be connected to external network(s) 21 via for instance a wireless link (e.g. for retrieving map data). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly or via dedicated sensor control circuitry 2 in the vehicle. The communication/antenna interface 13 may further provide the possibility to send output to a remote location (e.g. remote operator or control centre) by means of the antenna 7. Moreover, some sensors in the vehicle may communicate with the control device 10 using a local network setup, such as CAN bus, I2C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Example embodiments are set out in the below listed items.

1. A method for providing a road model of a portion of a surrounding environment of a vehicle, the method comprising:

obtaining a geographical position of the vehicle from a localization system of the vehicle;
obtaining sensor data comprising spatial information about a road reference and a road boundary located in the surrounding environment of the vehicle;
determining a first lateral distance between the road reference and the road boundary;
obtaining a comparison between the determined first lateral distance and a corresponding second lateral distance between the road reference and the road boundary based on the geographical position of the vehicle, the second lateral distance being a stored reference distance;
controlling a driver-assistance or autonomous driving feature based on the comparison between the determined first lateral distance and the corresponding second lateral distance.

2. The method according to item 1, further comprising:

assigning a confidence value for the determined first lateral distance based on at least one predefined condition;
wherein the step of controlling the driver-assistance or autonomous driving feature is further based on the assigned confidence value.

3. The method according to item 2, further comprising:

comparing the assigned confidence value with a predefined confidence threshold;
wherein the step of controlling the driver-assistance or autonomous driving feature comprises:
suppressing the driver-assistance or autonomous driving feature if:

the comparison between the determined first lateral distance and the corresponding second lateral distance indicates that a difference between the determined first lateral distance and the obtained second lateral distance is above a first predefined threshold, or
the assigned confidence value for the determined first lateral distance is below the predefined confidence threshold.

4. The method according to item 2, further comprising:

comparing the assigned confidence value with a predefined confidence threshold;
obtaining the corresponding second lateral distance between the road reference and the road boundary;
wherein the step of controlling the driver-assistance or autonomous driving feature comprises:
applying the obtained second lateral distance as a control parameter for the driver-assistance or autonomous driving feature if:

the comparison between the determined first lateral distance and the corresponding second lateral distance indicates that a difference between the determined first lateral distance and the obtained second lateral distance is above a first predefined threshold, or
the assigned confidence value for the determined first lateral distance is below the predefined confidence threshold.

5. The method according to item 3 or 4, wherein the step of controlling the driver-assistance or autonomous driving feature comprises:
applying the determined first lateral distance as a control parameter for the driver-assistance or autonomous driving feature if:

the comparison between the determined first lateral distance and the corresponding second lateral distance indicates that a difference between the determined first lateral distance and the obtained second lateral distance is below a second predefined threshold, or
the assigned confidence value for the determined first lateral distance is above the predefined confidence threshold..

6. The method according to any one of the preceding items, wherein the sensor data further comprises at least one of a road reference type and a road reference identification, ID, for the road reference; and
wherein the comparison between the determined first lateral distance and the corresponding second lateral distance is further based on at least one of the road reference type and the road reference ID.

7. The method according to any one of the preceding items, further comprising:

sending the obtained geographical position of the vehicle and each first lateral distance to a remote entity; and
wherein the step of obtaining the comparison comprises receiving, from the remote entity, the comparison between the first lateral distance and the corresponding second lateral distance.

8. The method according to any one of items 1 - 6, further comprising:

sending the obtained geographical position of the vehicle to a remote entity;
receiving, from the remote entity, the corresponding second lateral distance between the road reference and the road boundary;
wherein the step of obtaining the comparison comprises *(locally)* comparing the first lateral distance with the corresponding second lateral distance.

9. The method according to any one of items 1 - 6, further comprising:

receiving, from a local data repository, the corresponding second lateral distance between the road reference and the road boundary based on the geographical position of the vehicle; and

wherein the step of obtaining the comparison comprises *(locally)* comparing each first lateral distance with the corresponding second lateral distance.

10. A computer-readable storage medium storing one or more programs configured to be executed by one or more processors of a vehicle control system, the one or more programs comprising instructions for performing the method according to any one of the preceding items.

11. A control device for providing a road model of a portion of a surrounding environment of a vehicle, the control device comprising control circuitry configured to:

obtain a geographical position of the vehicle from a localization system of the vehicle;
obtain sensor data comprising spatial information about a road reference and a road boundary located in the surrounding environment of the vehicle;
determine a first lateral distance between the road reference and the road boundary;
obtain a comparison between the determined first lateral distance and a corresponding second lateral distance between the road reference and the road boundary based on the obtained position, the second lateral distance being a stored reference distance;
control a driver-assistance or autonomous driving feature based on the comparison between the determined first lateral distance and the corresponding second lateral distance.

12. The control device according to item 11, wherein the control circuitry is further configured to assign a confidence value for the determined first lateral distance based on at least one predefined condition; and
control the driver-assistance or autonomous driving feature further based on the assigned confidence value.

13. The control device according to item 12, wherein the control circuitry is further configured to:

compare the assigned confidence value to a predefined confidence threshold; and
wherein the control circuitry is configured to control the driver-assistance or autonomous driving feature by:
suppressing the driver-assistance or autonomous driving feature if:

the comparison between the determined first lateral distance and the corresponding second lateral distance indicates that a difference between the determined first lateral distance and the obtained second lateral distance is above a first predefined threshold, or
the assigned confidence value for the determined first lateral distance is below the predefined confidence threshold.

14. The control device according to item 12, wherein the control circuitry is further configured to:

compare the assigned confidence value to a predefined confidence threshold;
obtain the corresponding second lateral distance between the road reference and the road boundary;
wherein the control circuitry is configured to control the driver-assistance or autonomous driving feature by:
applying the obtained second lateral distance as a control parameter for the driver-assistance or autonomous driving feature if:

the comparison between the determined first lateral distance and the corresponding second lateral distance indicates that a difference between the determined first lateral distance and the obtained second lateral distance is above a first predefined threshold, or
the assigned confidence value for the determined first lateral distance is below the predefined confidence threshold.

15. A vehicle comprising:

a localization system for monitoring a geographical position of the vehicle;
a perception system comprising at least one sensor for monitoring a surrounding environment of the vehicle;
a control device according to any one of items 11 - 14.

16. A method for providing verification data for road model estimations, the method comprising:

receiving a first set of vehicle data from a first remote vehicle, the first set of vehicle data comprising a geographical position of the first remote vehicle and sensor data comprising a lateral distance between a road reference and a road boundary at an area associated with the geographical position of the first remote vehicle; storing the first set of vehicle data in order to form a stored reference lateral distance between the road reference and the road boundary; receiving a second set of vehicle data from a second remote vehicle located in the area, the second set of vehicle data comprising a geographical position of the second remote vehicle; sending a signal to the second remote vehicle comprising information about the stored reference lateral distance between the road reference the road boundary.

17. The method according to item 16, wherein the second set of data further comprises sensor data comprising a second lateral distance between the road reference and the road boundary at the area, the method further comprising:

comparing the second lateral distance with the formed reference lateral distance; wherein the sent signal to the second remote vehicle comprises information about the comparison between the second lateral distance and the formed reference lateral distance.

18. The method according to item 16 or 17, wherein the step of receiving the first set of vehicle data from a first remote vehicle comprises receiving vehicle data from a plurality of remote vehicles, the vehicle data comprising the lateral distance between the road reference and the road boundary at the area obtained by each of the plurality of remote vehicles; and wherein the stored reference lateral distance is based on the received vehicle data from the plurality of remote vehicles.

19. A computer-readable storage medium storing one or more programs configured to be executed by one or more processors of a vehicle control system, the one or more programs comprising instructions for performing the method according to any one of items 16 - 18.

20. A method for providing a road model of a portion of a surrounding environment of a vehicle, the method comprising:

obtaining a geographical position of the vehicle from a localization system of the vehicle; obtaining sensor data comprising spatial information about a road reference located in the surrounding environment of the vehicle; obtaining a stored lateral distance between the road reference and a road boundary in the surrounding environment of the vehicle based on the geographical position of the vehicle and the sensor data; controlling a driver-assistance or autonomous driving feature based on the obtained stored lateral distance.

21. The method according to item 20, wherein the step of controlling the driver-assistance or autonomous driving feature comprises: applying the obtained stored lateral distance as a control parameter for the driver-assistance or autonomous driving feature during a predefined time period.

22. The method according to item 20 or 21, further comprising:

obtaining sensor data comprising spatial information about a road boundary located in the surrounding environment; assigning a confidence value for the spatial information about the road reference and/or the road boundary based on at least one predefined condition; comparing the confidence value with a predefined confidence threshold; applying the obtained stored lateral distance as a control parameter for the driver-assistance or autonomous driving feature during a predefined time period if the confidence value is below the predefined confidence threshold.

23. The method according to item 22, wherein the confidence value is a first confidence value, the at least one predefined condition is at least one first predefined condition, and the predefined confidence threshold is a first predefined confidence threshold, the method further comprising:

determining a first lateral distance between the road reference and the road boundary;

assigning a second confidence value to the first lateral distance based on at least one second predefined condition;

comparing the second confidence value with a second predefined confidence threshold;

applying the obtained stored lateral distance as a control parameter for the driver-assistance or autonomous driving feature during a predefined time period if the second confidence value is below the second predefined confidence threshold.

24. The method according to any one of items 20 - 23, wherein the sensor data further comprises at least one of a road reference type and a road reference identification, ID, for the road reference; and
wherein the step of obtaining the stored lateral distance is further based on at least one of the road reference type and the road reference ID.

25. The method according to any one of items 20 - 24, wherein the step of obtaining the stored lateral distance comprises retrieving, from a local data repository, the stored lateral distance between the road reference and the road boundary based on the geographical position of the vehicle and the sensor data.

26. The method according to any one of items 20 - 24, further comprising:

sending the obtained geographical position of the vehicle and the sensor data to a remote data repository; and wherein the step of obtaining the stored lateral distance receiving, from the remote data repository, the stored lateral distance between the road reference and the road boundary based on the geographical position of the vehicle and the sensor data.

27. A computer-readable storage medium storing one or more programs configured to be executed by one or more processors of a vehicle control system, the one or more programs comprising instructions for performing the method according to any one of items 20 - 26.

28. A control device for providing a road model of a portion of a surrounding environment of a vehicle, the control device comprising control circuitry configured to:

obtain a geographical position of the vehicle from a localization system of the vehicle;
obtain sensor data comprising spatial information about a road reference located in a surrounding environment of the vehicle;
obtain a stored lateral distance between the road reference and a road boundary in the surrounding environment of the vehicle based on the geographical position of the vehicle and the sensor data;
control a driver-assistance or autonomous driving feature based on the obtained stored lateral distance.

29. The control device according to item 28, wherein the control circuitry is configured to control the driver-assistance or autonomous driving feature by applying the obtained stored lateral distance as a control parameter for the driver-assistance or autonomous driving feature during a predefined time period.

30. The control device according to item 28 or 29, wherein the control circuitry is further configured to:

obtain sensor data comprising spatial information about a road boundary located in the surrounding environment;
assign a confidence value for the spatial information about the road reference and/or the road boundary based on at least one predefined condition;
compare the confidence value with a predefined confidence threshold;
apply the obtained stored lateral distance as a control parameter for the driver-assistance or autonomous driving feature during a predefined time period if the confidence value is below the predefined confidence threshold.

31. The control device according to item 30, wherein the confidence value is a first confidence value, the at least one predefined condition is at least one first predefined condition, and the predefined confidence threshold is a first predefined confidence threshold, the control circuitry being further configured to:

determine a first lateral distance between the road reference and the road boundary;
assign a second confidence value to the first lateral distance based on at least one second predefined condition;
compare the second confidence value with a second predefined confidence threshold;

apply the obtained stored lateral distance as a control parameter for the driver-assistance or autonomous driving feature during a predefined time period if the second confidence value is below the second predefined confidence threshold.

32. A vehicle comprising:

a localization system for monitoring a geographical position of the vehicle;
a perception system comprising at least one sensor for monitoring a surrounding environment of the vehicle;
a control device according to any one of items 28 - 31.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly or via dedicated sensor control circuitry 2 in the vehicle. The communication/antenna interface 13 may further provide the possibility to send output to a remote location (e.g. remote operator or control centre) by means of the antenna 7. Moreover, some sensors in the vehicle may communicate with the control device 10 using a local network setup, such as CAN bus, I2C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

In summary, the present disclosure relates to methods and control devices for providing a road model of a portion of a surrounding environment of a vehicle. More specifically, the present disclosure relates to utilizing stored reference data in the form of a lateral offset of a road reference (e.g. lane marker) in relation to a road boundary in order to either verify a local measurement of the lateral offset or to control a driver-assistance or autonomous driving feature directly based on the stored reference data. Additionally, in reference to the latter aspect, the driver-assistance or autonomous driving feature may be controlled based on a fusion of sensor data the obtained stored lateral distance. The present disclosure also relates to a method for providing verification data for road model estimations.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising spatial information about a road reference and a geographical position of the vehicle may be interchanged based on a specific realization. Such variation will depend on the software and hardware systems chosen and on designer choice. Moreover, features or steps may be interchanged between embodiments unless explicitly stated otherwise. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method (100) for controlling a driver-assistance or autonomous driving feature based on a road model of a portion of a surrounding environment of a vehicle, the method comprising:

   obtaining (101) a geographical position of the vehicle from a localization system of the vehicle;
   obtaining (102) sensor data comprising spatial information about a road reference and a road boundary located in the surrounding environment of the vehicle;
   determining (103) a first lateral distance between the road reference and the road boundary;
   assigning (106) a confidence value for the determined first lateral distance based on at least one predefined condition;
   comparing (107) the assigned (106) confidence value with a predefined confidence threshold;
   obtaining (113) a corresponding second lateral distance between the corresponding road reference and the road boundary;
   obtaining (104) a comparison between the determined first lateral distance and the corresponding second lateral distance between the road reference and the road boundary based on the geographical position of the vehicle, the second lateral distance being a stored reference distance;
   controlling (105) a driver-assistance or autonomous driving feature based on the comparison between the determined first lateral distance and the corresponding second lateral distance and further based on the assigned (106) confidence value, wherein the controlling (105) the driver assistance or autonomous driving feature comprises:
   applying (110) the obtained second lateral distance as a control parameter for the driver-assistance or autonomous driving feature if:

      the comparison between the determined first lateral distance and the corresponding second lateral distance indicates that a difference between the determined first lateral distance and the obtained second lateral distance is above a first predefined threshold, or
      the assigned (106) confidence value for the determined first lateral distance is below the predefined confidence threshold.

2. The method (100) according to claim 1 wherein the step of controlling (105) the driver-assistance or autonomous driving feature comprises:
   suppressing (110) the driver-assistance or autonomous driving feature if:

      the comparison between the determined first lateral distance and the corresponding second lateral distance indicates that a difference between the determined first lateral distance and the obtained second lateral distance is above a first predefined threshold, or
      the assigned (106) confidence value for the determined first lateral distance is below the predefined confidence threshold.

3. The method (100) according to claim 2, wherein the step of controlling (105) the driver-assistance or autonomous driving feature comprises:

applying (112) the determined first lateral distance as a control parameter for the driver-assistance or autonomous driving feature if:

the comparison between the determined first lateral distance and the corresponding second lateral distance indicates that a difference between the determined first lateral distance and the obtained second lateral distance is below a second predefined threshold, or
the assigned (106) confidence value for the determined first lateral distance is above the predefined confidence threshold.

4. The method (100) according to any one of the preceding claims, wherein the sensor data further comprises at least one of a road reference type and a road reference identification, ID, for the road reference; and
wherein the comparison between the determined first lateral distance and the corresponding second lateral distance is further based on at least one of the road reference type and the road reference ID.

5. The method (100) according to any one of the preceding claims, further comprising:

sending the obtained (101, 102) geographical position of the vehicle and each first lateral distance to a remote entity; and
wherein the step of obtaining (104) the comparison comprises receiving, from the remote entity, the comparison between the first lateral distance and the corresponding second lateral distance.

6. The method (100) according to any one of claims 1 - 4, further comprising:

sending the obtained (101) geographical position of the vehicle to a remote entity;
receiving, from the remote entity, the corresponding second lateral distance between the road reference and the road boundary;
wherein the step of obtaining the comparison comprises comparing the first lateral distance with the corresponding second lateral distance.

7. The method (100) according to any one of claims 1 - 4, further comprising:

receiving, from a local data repository, the corresponding second lateral distance between the road reference and the road boundary based on the geographical position of the vehicle; and
wherein the step of obtaining (104) the comparison comprises comparing each first lateral distance with the corresponding second lateral distance.

8. A computer-readable storage medium storing one or more programs configured to be executed by one or more processors of a vehicle control system, the one or more programs comprising instructions for performing the method (100) according to any one of the preceding claims.

9. A control device (10) for controlling a driver-assistance of autonomous driving feature based on a road model of a portion of a surrounding environment of a vehicle (1), the control device (10) comprising control circuitry (11) configured to:

obtain a geographical position of the vehicle from a localization system (4) of the vehicle;
obtain sensor data comprising spatial information about a road reference (8a-8d) and a road boundary (8a, 8d) located in the surrounding environment of the vehicle (1);
determine a first lateral distance (15) between the road reference and the road boundary;
assign a confidence value for the determined first lateral distance (15) based on at least one predefined condition;
compare the assigned confidence value to a predefined confidence threshold;
obtain the corresponding second lateral distance between the corresponding road reference and the road boundary;
obtain a comparison (17) between the determined first lateral distance (15) and the corresponding second lateral distance between the road reference and the road boundary based on the obtained geographical position of the vehicle (1), the second lateral distance being a stored reference distance; and

control a driver-assistance or autonomous driving feature based on the comparison (17) between the determined first lateral distance and the corresponding second lateral distance and further based on the assigned confidence value, wherein the controlling the driver assistance or autonomous driving feature comprises:

applying the obtained second lateral distance as a control parameter for the driver-assistance or autonomous driving feature if:

the comparison (17) between the determined first lateral distance (15) and the corresponding second lateral distance indicates that a difference between the determined first lateral distance (15) and the obtained second lateral distance is above a first predefined threshold, or

the assigned confidence value for the determined first lateral distance (15) is below the predefined confidence threshold.

10. The control device (10) according to claim 12, wherein the control circuitry (11) is further configured to control the driver-assistance or autonomous driving feature by:

suppressing the driver-assistance or autonomous driving feature if:

the comparison (17) between the determined first lateral distance and the corresponding second lateral distance indicates that a difference between the determined first lateral distance (15) and the obtained second lateral distance is above a first predefined threshold, or

the assigned confidence value for the determined first lateral distance (15) is below the predefined confidence threshold.

11. A vehicle (1) comprising:

a localization system (4) for monitoring a geographical position of the vehicle;

a perception system (6) comprising at least one sensor (3a-3c) for monitoring a surrounding environment of the vehicle (1);

a control device (10) according to any one of claims 9 - 10.

101

Obtain position of the
vehicle

100

102

Obtain sensor data of road
geometry

103

Determine lateral
distance(s) in road
geometry

106

Assign confidence value

104

Obtain comparison with
stored reference value(s)

105

Control AD or ADAS
feature

*Fig. 1*

**Fig. 2**

```
        ( START )
            |
            v
   +------------------+  106
   | Assign confidence |
   |     value(s)      |
   +------------------+
            |
            v
   +------------------+  107
   | Obtain confidence |
   |   threshold(s)    |
   +------------------+
            |
            v
   +------------------+  108
   | Compare confidence|
   |  value(s) against |
   |  threshold value(s)|
   +------------------+
            |
            v
      /--------------\  109
     / Confidence      \
    /  value(s)          \      YES      +------------------+  110
    \  outside of        /---------->    | Suppress AD/ADAS |
     \ threshold(s)?    /                 |     feature       |
      \--------------/                    +------------------+
            |                                     ^
           NO  111                                |
            v                                      |
      /--------------\                             |
     / Comparison between\                         |
    / measured lateral    \        YES             |
    \ distance and         /--------------------->-+
     \ reference distance  /
      \ exceeding         /
       \ threshold?      /
        \--------------/
            |
           NO
            v
                          +------------------+  112
                          |                   |
            +------------>| Allow AD/ADAS     |
                          |    feature        |
                          +------------------+
```

*Fig. 3*

Fig. 4

Fig. 5

*Fig. 6a*

*Fig. 6b*

201

Obtain position of the vehicle

200

202

Obtain sensor data of road geometry

203

Obtain a stored lateral distance

204

Control AD or ADAS feature

*Fig. 7*

*Fig. 8*

301 Obtain position of the vehicle

302 Obtain sensor data of road geometry

303 Obtain a stored lateral distance

304 Determine lateral distance(s) in road geometry

305 Assign confidence value

306 Compare confidence value(s) with associated threshold(s)

307 Control AD or ADAS feature

300

Fig. 9